Europäisches Patentamt

European Patent Office

Office européen des brevets

(19)

(11) Veröffentlichungsnummer: **0 458 311 A2**

## (12) EUROPÄISCHE PATENTANMELDUNG

(21) Anmeldenummer: **91108298.0**

(51) Int. Cl.⁵: **G02B 26/10**

(22) Anmeldetag: **23.05.91**

(30) Priorität: **25.05.90 DE 4016940**

(43) Veröffentlichungstag der Anmeldung:
**27.11.91 Patentblatt 91/48**

(84) Benannte Vertragsstaaten:
**CH DE FR GB IT LI NL**

(71) Anmelder: **Firma Carl Zeiss**

**W-7920 Heidenheim (Brenz)(DE)**
(84) **CH DE FR IT LI NL**

Anmelder: **CARL-ZEISS-STIFTUNG, HANDELND ALS CARL ZEISS**

**W-7920 Heidenheim(DE)**
(84) **GB**

(72) Erfinder: **Simon, Karl-Heinz Dr.**
**Am Espenrain 5**
**W-7082 Oberkochen(DE)**

(54) **Multiples elektrooptisches Abbildungssystem.**

(57) Bei einem multiplen elektrooptischen Abbildungssystem sind die einzelnen Abbildungseinheiten über ein Bildzerlegungselement gekoppelt, das die Bildinformationen (Videosignale) zwangssynchronisiert und auf einem Display wiedergibt.

Fig. 1

EP 0 458 311 A2

Die Erfindung betrifft ein multiples elektrooptisches Abbildungssystem für mindestens zwei Abbildungseinheiten, die über ein Bildzerlegungselement (Scanner) miteinander gekoppelt sind.

Für Beobachtungs-, Überwachungs- oder Zielaufgaben ist es günstig, mit einem Abbildungssystem sowohl große Raumwinkel abzudecken für die Zielerfassung, als auch kleine Raumwinkel zur Erkennung von Ziel-Details.

Aus der US-PS 3.804.976 ist ein multiples IR-Abbildungssystem bekannt, bei dem zwei Abbildungssysteme verschiedener Brennweite über einen zweiseitig reflektierenden Scanspiegel verbunden sind. Über Detektoren werden die von den beiden einzelnen Abbildungssystemen erhaltenen Bilder simultan auf zwei diskreten Monitoren dargeboten.

Der Erfindung liegt die Aufgabe zugrunde, ein multiples elektrooptisches Abbildungssystem weiter zu vereinfachen und für den Gebrauch zu verbessern.

Diese Aufgabe wird erfindungsgemäß dadurch gelöst, daß zur Auswertung der von den einzelnen Abbildungseinheiten gelieferten Bildinformationen für jede der Abbildungseinheiten ein Detektor vorgesehen ist, und daß zur Wiedergabe der Bildinformation aus den Detektorsignalen ein gemeinsames Display für die Abbildungseinheiten eines multiplen elektrooptischen Abbildungssystems vorgesehen ist.

In einer vorteilhaften Ausgestaltung der Erfindung besteht das Bildzerlegungselement aus einem zweiseitigen Spiegel, der um eine oder um mehrere Achsen, vorzugsweise periodisch, beweglich ist. Das Bildzerlegungselement kann aber auch aus anderen reflektierenden und/oder brechenden Elementen bestehen, die infolge der Bewegung das Bild zerlegen. Als Bewegung kann vorteilhaft auch die Rotation eingesetzt werden, wobei das optische Element beispielsweise ein Spiegelpolygon oder ein Prismenrad sein kann. Auch lineare Bewegungen geeigneter optischer Elemente z.B. von Retroreflektoren sind einsetzbar. Für das sogenannte Zeilensprungverfahren können Bewegungen des Bildzerlegungselementes um zusätzliche Achsen eingesetzt werden, bzw. auch separate Vorrichtungen in einem oder in mehreren der Abbildungseinheiten.

Ausführungsbeispiele der Erfindung sind in der Zeichnung dargestellt und werden im folgenden näher beschrieben.

Es Zeigen

Figur 1 ein elektrooptisches Abbildungssystem für zwei Abbildungseinheiten verschiedener Brennweite;

Figur 2 ein elektrooptisches Abbildungssystem für vier Abbildungseinheiten zur Erfassung eines Winkelbereiches von 360°.

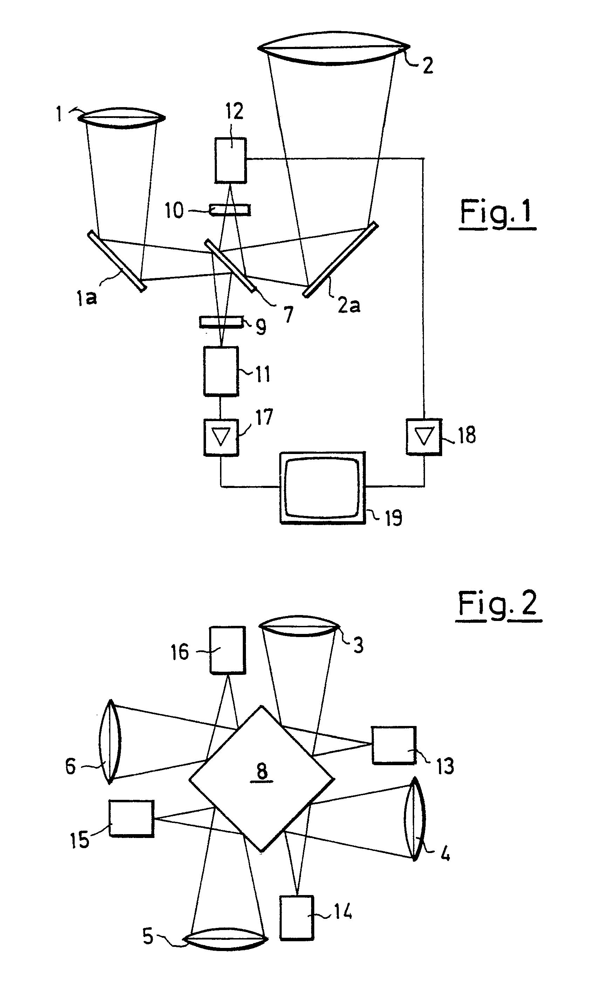

In der Darstellung der Figur 1 sind die Abbildungseinheiten mit den Bezugszeichen (1) und (2) gekennzeichnet. Strahlung aus der kurzbrennweitigen Einheit (1) wird über einen Umlenkspiegel (1a) Strahlung aus der langbrennweitigen Einheit (2) über einen Umlenkspiegel (2a) auf den Scanspiegel (7) gelenkt. Nach dem Scanspiegel kann für die betreffenden Abbildungseinheiten eine Zeilen- oder Spaltensprungvorrichtung (9, 10) vorgesehen sein. Die von der Abbildungseinheit (1) gelieferte Strahlung wird dem Detektor (11) zugeführt, die von der Abbildungseinheit (2) stammende Strahlung dem Detektor (12). Über Verstärker (17, 18) gelangen die Signale des Detektors auf das Display (19) oder auf einen Monitor.

In der Abbildung der Figur 2 ist dargestellt, wie ein erfindungsgemäßes Abbildungssystem zur simultanen Erfassung größerer Winkelbereiche eingesetzt wird. Die Abbildungseinheiten (3, 4, 5 und 6) sind in einem Winkelbereich von insgesamt 360° um einen Polygonspiegel (8) angeordnet, der durch seine Bewegung die Sehfelder abtastet (scannt). Die synchron gewonnenen Bildinformationen gelangen dann über die Detektoren (13, 14, 15 und 16) und nicht eingezeichnete, in analoger Weise wie in Figur 1 angeordnete Verstärker auf ein gemeinsames, ebenfalls nicht eingezeichnetes Display oder einen Monitor.

Die Darstellungen der Figur 1 und 2 geben den prinzipiellen Aufbau des erfindungsgemäßen multiplen elektrooptischen Abbildungssystems wieder. Es sind nicht dargestellt Einzelheiten der Elektronik sowie eventuell eingesetzte optische Elemente für Zeilen- oder Spaltensprung, da diese für den Fachmann jederzeit aus dem vorbekannten Stand der Technik zu entnehmen sind.

**Patentansprüche**

1. Multiples elektrooptisches Abbildungssystem für mindestens zwei Abbildungseinheiten, die über ein Bildzerlegungselement (Scanner) miteinander gekoppelt sind, dadurch gekennzeichnet, daß zur Auswertung der Bildinformationen jeder Abbildungseinheit (1-2; 3-6) ein Detektor (10-11; 13-16) zugeordnet ist und daß zur Darstellung der Bildinformation aus den Detektorsignalen ein gemeinsames Display (19) für die Abbildungseinheiten (1-2; 3-6) eines multiplen elektrooptischen Abbildungssystems (Figur 1 und Figur 2) vorgesehen ist.

2. Multiples elektrooptisches Abbildungssystem nach Anspruch 1, dadurch gekennzeichnet, daß das Bildzerlegungselement ein zweiseitig reflektierender Spiegel (7) ist.

3. Multiples elektrooptisches Abbildungssystem nach Anspruch 1, dadurch gekennzeichnet, daß das Bildzerlegungselement ein Polygonspiegel (8) ist.

4. Multiples elektrooptisches Abbildungssystem nach einem der Ansprüche 1-3, dadurch gekennzeichnet, daß das Bildzerlegungselement zur Erzeugung eines Zeilen- oder Spaltensprunges beweglich angeordnet ist.

5. Multiples elektrooptisches Abbildungssystem nach einem der Ansprüche 1-3, dadurch gekennzeichnet, daß in mindestens einer Abbildungseinheit ein Element zur Erzeugung eines Zeilen- oder Spaltensprunges vorgesehen ist.

6. Multiples elektrooptisches Abbildungssystem nach Anspruch 2, dadurch gekennzeichnet, daß die optischen Achsen der Abbildungseinheiten parallel zueinander sind.

7. Multiples elektrooptisches Abbildungssystem nach Anspruch 2 oder 3, dadurch gekennzeichnet, daß die optischen Achsen der Abbildungseinheiten nicht parallel zueinander sind.

8. Multiples elektrooptisches Abbildungssystem nach Anspruch 7, dadurch gekennzeichnet, daß die Abbildungseinheiten so angeordnet sind, daß sie ein Sehfeld von 360° bedecken.

Fig.1

Fig.2